# EUROPEAN PATENT APPLICATION

(11) **EP 4 603 844 A1**
(43) Date of publication of application: **20.08.2025**
(21) Application number: 24157346.8
(22) Date of filing: 13.02.2024
(51) Int. Cl.: G01N 35/04, G01N 35/00, G01N 35/10

(54) **SAMPLE ANALYZING SYSTEM AND A COMPUTER IMPLEMENTED METHOD OF CAPPING SECONDARY TUBES**

(71) Applicant: Beckman Coulter, Inc., Brea, CA 92821 (US)
(72) Inventor: QUINT, Joseph, Orange, CA 92867 (US); BENEGAL, Aditya Mohan, 560055 Malleswaram, Bangalore (IN); HANUMANTHAPPA, Anil Kumar, 560100 Kammasandra, Bengaluru (IN); NAETZER, Beate, 85604 Zorneding (DE); JOHNS, Charles, Brownsburg, IN 46112 (US)
(74) Representative: Maiwald GmbH

(57) **Abstract**

A sample analyzing system (1) for analyzing a sample contained within a primary tube entering the sample analyzing system (1) comprises a plurality of stations (11, 12, 13, 14, 15) for analyzing samples and/or for storing samples and/or for transporting samples to an offline analyzer. An aliquoter station (3) is configured to, depending on which tests are scheduled for the sample within the primary tube, fill a share of the sample contained in the primary tube into at least one secondary tube, wherein the secondary tube is scheduled for being sent to at least one selected station (11, 12, 13, 14, 15) from the plurality of stations (11, 12, 13, 14, 15). A first cap station (4a) is configured to apply a cap of a first cap type to the secondary tube. A second cap station (4b) is configured to apply a cap of a second cap type to the secondary tube, wherein the second cap type differs from the first cap type. A cap selection module (6) is configured to select a capping selection for the secondary tube, wherein capping selections include one or more of an uncapped state, a first cap state, wherein the secondary tube is closed by a cap of the first cap type, and a second cap state, wherein the secondary tube is closed by a cap of the second cap type. Therein, the sample analyzing system (1) is further configured to, depending on the selected capping selection, provide the secondary tube with a cap of the first cap type at the first cap station if the first cap state is selected, or with a cap of the secondary cap type at the second cap station if the second cap state is selected, or leave the secondary tube uncapped if the uncapped state is selected, before the secondary tube is send to its at least one selected station (11, 12, 13, 14, 15).

## Description

The invention relates to a sample analyzing system and a computer implemented method of capping secondary tubes of a sample analyzing system.

In sample analyzing systems, samples arranged in a plurality of tubes may be analyzed and/or processed. In order to process and/or analyze the contents of the tubes in the sample analyzing system, also called laboratory automation system (abbreviated as: LAS) or automated lab system, a primary tube containing a sample needs to be recognized and/or identified to be correctly processed in the laboratory automation system. Multiple manufacturers produce different types of primary tubes.

Known sample analyzing systems may comprise a plurality of stations. At some of said stations, the sample within a tube may be pre-processed, analyzed, and/or postprocessed. Other stations are configured to receive tubes to be transported to an offline analyzer, e.g., if the sample analyzing system is not configured to perform one or more analyses that shall be carried out on the biological sample.

It is an object of the invention to enable an improved sample analyzing system, wherein the handling of the tubes is improved, in particular the capping of the sample tubes is improved.

This problem is solved by the subject-matter of the independent claims. Preferred embodiments are the subject-matter of the dependent claims.

An aspect relates to a sample analyzing system for analyzing a sample contained within a primary tube entering the sample analyzing system. The sample analyzing system comprises a plurality of stations for analyzing samples and/or for storing samples and/or for transporting samples to an offline analyzer. An aliquoter station is configured to, depending on which tests are scheduled for the sample within the primary tube, fill a share of the sample contained in the primary tube into at least one secondary tube, wherein the secondary tube is scheduled for being sent to at least one selected station from the plurality of stations. A first cap station is configured to apply a cap of a first cap type to the secondary tube. A second cap station is configured to apply a cap of a second cap type to the secondary tube, wherein the second cap type differs from the first cap type. A cap selection module is configured to select a capping selection for the secondary tube, wherein capping selections include one or more of an uncapped state, a first cap state, wherein the secondary tube is closed by a cap of the first cap type, and a second cap state, wherein the secondary tube is closed by a cap of the second cap type. Therein, the sample analyzing system is further configured to, depending on the selected capping selection, close the secondary tube by a cap of the first cap type at the first cap station if the first cap state is selected, or by a cap of the secondary cap type at the second cap station if the second cap state is selected, or leave the secondary tube uncapped if the uncapped state is selected, before the secondary tube is send to its at least one selected station.

The sample analyzing system is configured to analyze a sample contained within the primary tube entering the sample analyzing system. The sample analyzing system may be configured to analyze and/or process the samples semi-automatically and/or automatically. Therein, a plurality of tubes containing samples may be analyzed and/or processed simultaneously. The tubes, in particular the secondary tubes, may be part of the sample analyzing system.

The sample (also referred to as: "biological sample" and/or "liquid sample") may be a sample of a bodily fluid of a human or animal subject. For example, the bodily fluid may be a physiological fluid, such as blood, saliva, urine, sweat, amniotic fluid, cerebrospinal fluid, ascites fluid, or the like. The biological sample may be put into a sample container after collection, and it may be held in the container while being processed. The sample container may be a sample tube. Typically, sample tubes comprise a closed tube end and an end opposite thereto. The latter end defines an opening for inserting the sample in the sample tube. The opening may be closed, e.g., sealed, by a cap. On said sample, a laboratory analysis is to be performed by the sample analyzing system. Each sample contained in a primary tube may come with an information regarding tests requested for said sample. Each sample may be associated with a test order. The sample analyzing system may obtain the test order for the sample, e.g., by reading a barcode on the primary tube and accessing information that specifies the test order associated with the sample, e.g., an alphanumeric string that uniquely identifies the test order and the location in which the test order is stored.

The sample analyzing system comprises the plurality of stations. Therein, an automation component may be provided for moving tubes and/or container carriers carrying tubes from one station to another station or for moving tubes or container carriers from one component of a laboratory instrument to another component of the same laboratory instrument or to another component of another laboratory instrument. The automation component may include a track, a belt and/or a container carrier configured to move samples.

Generally, the sample analyzing system may be an assembly comprising a plurality of stations and a computing device, wherein the computing device may be operatively connected to the plurality of stations and configured to control each station. A station may be a laboratory analyzer, a pre-analysis laboratory instrument, a post analysis laboratory instrument, an input/output module, an automation component (e.g., track, belt, container carrier) configured to move a sample within the laboratory. In particular, the sample analyzing system may comprise one or more subsystems, wherein a subsystem comprises one or more components of the sample analyzing system.

A pre-analysis laboratory instrument may be configured to carry out one or more analytic steps on a sample to prepare the sample for the analytic instrument(s). A pre-analysis laboratory instrument may include a centrifuge, a decapper, recapper (e.g., for putting caps back on sample tubes) and/or aliquoter.

A post-analysis laboratory instrument may be configured to carry out one or more postanalytic steps on the sample after the sample has been processed by one or more laboratory analyzers. A post-analysis laboratory instrument may include one or more of a recapper, a storage device, a refrigerator, and an input/output device. Both pre-analysis and post-analysis laboratory instruments may be referred to as peri-analytical laboratory instruments.

In particular, the laboratory instrument may generally be a laboratory device for laboratory or clinical testing of a sample, for example a sample containing sample material obtained from one or more patients or individuals. The term laboratory instrument may include, for example, devices for collecting, manipulating, preparing, transporting, sorting, storing and/or actually analysing one or more samples, for example to obtain and/or measure one or more parameters based on the analysis.

Each station may comprise at least one of the laboratory instruments mentioned above. The stations may be configured to handle samples according to a predetermined processing method. For example, a station may be configured to analyze samples and/or to store samples and/or to transport samples to an offline analyzer and/or to centrifuge samples, and/or to identify samples. Each station may be characterized and/or associated to said predetermined processing method of the sample. These processing methods may differ from each other. For example, a first station may comprise a first analyzer configured to apply a first analyzing method to the sample, a second station may comprise a second analyzer configured to apply a second analyzing method to the sample, and a third station may comprise a fridge and/or a freezer for storing the sample.

Each station may be arranged at a different location of the sample analyzing system. Alternatively, at least some of the stations may be arranged at the same or an adjacent location. Therein, a first station may be provided as a substation of second station. For example, a station for identifying the sample tube may be provided as a substation of a station for analyzing the sample. As another example, a station may be configured to provide two different analyzing methods. Thus, the station may comprise two substations, each of which being characterized and/or associated to a different analyzing method of the sample.

The sample analyzing system may comprise different stations for storing samples, e.g., a fridge station comprising a fridge for storing the sample in a cooled environment, a freezing station comprising a freezer for storing the sample in a frozen state, and/or a deep-freezing station comprising a deep freezer for storing the sample in a deep-frozen state.

Similarly, the sample analyzing system may comprise different stations for analyzing samples, e.g., wherein different kinds of analyzers are provided, and/or different stations for transporting samples to different offline analyzers. These stations for transporting, also referred to as transportation stations, may simply collect samples for shipping. From such a transport station, samples may be transported to an offline analyzer being within the same laboratory as the sample analyzing system, or they may be transported to an offline analyzer being arranged rather remote from said laboratory, e.g. an offline analyzer to which the sample has to be shipped in a securely packaged manner. Such an offline analyzer may be provided as an analyzer not being connected to the sample analyzing system, e.g. via an automatic transportation component. Thus, sample tubes cannot be transported to the offline analyzer by using said automatic transportation component.

Some or all of the stations may be connected by an automatic transportation component, also referred to as automation component, e.g., a track and/or a conveyor and/or at least one container carrier for, e.g., automatically, conveying the primary and/or secondary tubes between the stations of the sample analyzing stations.

The aliquoter station is configured to aliquot the sample. The aliquoter station may comprise a cap opener for opening a primary cap of the primary tube. The aliquoter station may comprise means for removing a share of the sample from the primary tube, e.g., a pipette, and filling said share of the sample into the secondary tube. The sample within the primary tube may be referred to as primary sample. Each share of the primary sample filled into a secondary tube may be referred to as secondary sample.

Depending on the analyzing process(es) the primary sample in the primary tube is scheduled for, e.g., the tests comprised in the test order, the aliquoter station may generate more than one secondary tube with a secondary sample. For example, the aliquoter station may prepare no, one, two, three or more secondary tubes with such secondary samples from the primary sample within the primary tube.

Each secondary tube may be scheduled for being sent to at least one selected station from the plurality of stations. Each secondary tube may be scheduled to be sent to exactly one selected station, or to more than one selected station. For example, a secondary tube may be scheduled to be sent to a storage station first, and then to an analyzing station and/or to a station for transporting the sample to an offline analyzer.

The first cap station is configured to close the secondary tube with a cap of the first cap type, and the second cap station is configured to close the secondary tube with a cap of the second cap type. Therein, one cap type may be more liquid tight than the other. Embodiments of cap types are a push cap, a screw cap, a welding cap, a foam cap, a lid, etc. The first and second cap types differ from each other. For example, the first cap type may be a push cap, and the second cap type may be a screw cap.

The first and second cap types are configured to be applied to and close the secondary tubes. For this, the secondary tubes may have a similar and/or equal configuration, e.g., diameter, height, and/or thread. Exemplarily, while the primary tubes may differ, e.g., because they are sent to the sample analyzing system from different clients, the secondary tubes are provided as sample tubes of the sample analyzing system that can be configured with an equal configuration. In particular, the first and second cap types are configured to be applied to the secondary tubes so that they close these tubes.

The cap selection module is configured to select the capping selection for each secondary tube. The cap selection module may be provided as a software module running on a processor and/or it may comprise said processor. It may be provided as a computing device, wherein a software is running on the computing device, the software comprising instructions to instruct a processor to carry out the action for which the module is configured. The cap selection module selects the capping selection from at least the following three capping states:
- the uncapped state,
- the first cap state, and
- the second cap state.

In some embodiments, the cap selection module may have more options to select from, e.g., a third cap state and/or a primary cap for a primary tube. The selection carried out by the cap selection module may depend on the at least one selected station.

Depending on the selected capping selection, the secondary tube is closed by a cap in accordance with the selected capping selection. In particular, the secondary tube is closed by a cap of the first cap type at the first cap station if the first cap state is selected by the cap selection module. Alternatively, the cap is closed by a cap of the secondary cap type at the second cap station if the second cap state is selected by the cap selection module. Alternatively, the cap is left uncapped if the uncapped state is selected by the cap selection module. The sample analyzing system is configured to bring and/or keep the secondary tube in the capping state corresponding to the selected capping selection before sending the secondary tube to the at least one selected station.

The sample analyzing system enables capping the secondary tubes correctly for each selected station. The sample analyzing system is configured to apply different caps to the secondary tubes, depending on the selected sample handling process scheduled to be applied at the respective selected station. Thereby, a versatile and/or efficient sample analyzing system is enabled.

According to an embodiment, the cap selection module is configured to base its selection of the capping selection on the at least one selected station, in particular on a processing method the selected station is configured to apply to the secondary tube. For example, in case the secondary tube is scheduled to be sent to an analyzer of a station for analyzing samples, the cap selection module may select the uncapped state as capping selection. Then, the secondary tube is left uncapped, and the analyzer may directly access and/or handle the secondary sample within the secondary tube. Thus, the selected station for analyzing samples does not require any cap opener to handle the secondary tube. Different stations may require the secondary tube to be in different cap states. For example, a centrifuge station may require the secondary tube to be in any capped state, while a station comprising an optical sensor may have no restriction about the capping state of the secondary tube. A deep-freezing storage station may require a tightly capped state, e.g., a screw capped state, while a fridge storage station may just require any capped state. The cap selection module may be configured to base its selection of the capping selection on at least a processing method applied by the at least one selected station. This enables an optimized capping for each selected station, thereby improving the functionality of the sample analyzer station.

According to an embodiment, the cap selection module is configured to base its selection of the capping option on a workload at the at least one selected station. For example, in case an analyzer at one of the station is busy, the secondary tube could be scheduled to an alternative station for storage and/or for transport to an offline analyzer. Thus, instead of sending the secondary tube to the station with the busy analyzer and capping it accordingly, the cap selection module may select a capping selection suitable for the alternative station. This may increase the handling flexibility of the cap selection module.

According to an embodiment, the second cap type closes the secondary tube tighter than the first cap type. For example, a higher longitudinal force may be required to separate a cap of the second cap type from the tube than a cap of the first cap type. Thus, the second cap type may be better suited to store the secondary sample in the secondary tube for longer and/or under more extreme conditions, e.g., in a deep-frozen state. The second cap type may, thus, also be better suited for shipping the secondary sample in the secondary tube to a remote offline analyzer.

For example, the first cap type may be implemented as a push cap, and/or the second cap type may be implemented as a screw cap. The screw cap will usually close the secondary tube more liquid tight than the push cap. However, automatically handling screw caps may be more difficult and/or time consuming than push caps.

Generally, while the second cap type may close the secondary tube tighter than the first cap type, it may also be more expensive and/or more difficult to handle than the first cap type. The invention enables choosing the second cap type only when required but choosing the first cap type whenever sufficient. For example, a push cap may be sufficient for storing the secondary sample in a cold and/or frozen state for up to a predetermined period, e.g., up to one week, but a screw cap may be required when storing it for longer or in a deep-frozen state. This enables an optimization of the sample analyzing system in terms of handling efficiency and/or costs.

In an embodiment, the application of the second cap type like a screw cap may be performed at the aliquoter station, e.g., by a secondary tube robot. Therein, the secondary tube may be clamped by an aliquoter track segment's tube clamp, e.g., while sitting in a container carrier. The application of the first cap type like a push cap may be performed by an output instrument, e.g. by a recapper robot, onto the secondary tube being clamped by an output track segments tube clamp, e.g., also while sitting in the container carrier.

According to an embodiment, in case the secondary tube is scheduled to be sent to a station for transporting samples to an offline analyzer, e.g., a transport station, the offline analyzer being remote and/or unconnected from the sample analyzing system, the cap selection module is configured to select the second cap state for the secondary tube. Thus, the secondary tube may be sealed adequately before shipping it to the offline analyzer. The second cap type may be configured to comply with official transportation regulations, e.g., with DOT (Department of Transportation) and/or IATA (International Air Transportation Association) regulations. For example, the screw cap complies with these official regulations. This enables sealing the secondary sample tube, e.g., automatically and/or semi-automatically, in a way that complies with the official regulations.

According to an embodiment, in case the secondary tube is scheduled to be send to a station in which the secondary tube may and/or is required to be open, the cap selection module is configured to select the uncapped state for the secondary tube. These stations are, for instance, stations for analyzing samples, e.g., the secondary sample. Whenever the sample tubes, e.g., the secondary sample tubes, arrive at the analyzer, they can be accessed and/or processed directly without having to open them first. Thereby, an optimized sample handling may be achieved.

According to an embodiment, in case the secondary tube is scheduled to be sent to a station for storing samples, the cap selection module is configured to select the first cap state or the second cap state for the secondary tube. In particular, in this case the selection of the selected cap state may depend on a scheduled storage time and/or a storage method for the secondary tube. During a routing step, it may be found that the requested test can be carried out in the sample analyzing system, but not instantaneously, i.e. at the time point in which it is ordered/assigned to an analyzer, so the sample will be scheduled to be stored for a while first. If this is the case, for example, the first cap type, e.g., a push cap, may be sufficient for storing the secondary sample in a cold and/or frozen state for up to a predetermined period, e.g., up to one week, but the second cap type, e.g., a screw cap, may be required when storing it for longer or in a deep-frozen state. This enables an improvement of the sample analyzing system in terms of handling efficiency and/or costs.

According to an embodiment, the cap selection module is configured to obtain at least one capping option for the at least one selected station and to select the capping selection for the secondary tube based on said at least one capping option. In particular the capping option corresponds to one of the capping selections. The obtained capping option may be associated to the selected station. For example, a station for analyzing samples, e.g., a station comprising any analyzer, may be associated to the uncapped state as capping option, and/or a station for shipping samples to a remote offline analyzer may be associated to the second cap state as capping option. An operator may associate the capping options to the stations. In particular, each station is associated with at least one capping option, e.g., with one capping option or with a plurality of capping options Thereby, the capping states in which the sample tubes, e.g., the secondary tubes, arrive at the different stations may be altered by associating other capping options to the stations. This may enable an improved configuration of the sample analyzing system, e.g., when a station is configured differently and/or added to the sample analyzing system.

In an embodiment, the cap selection module is be provided with a fail-save mechanism configured to overrule and/or correct capping options associated to stations but not being compatible with said selected station. The association may have been done erroneously by an operator. This overruling/correcting may be implemented automatically or via a user feedback-loop. For example, if the secondary tube is heading for remote analysis in a different lab, meaning to a station for transporting the sample to a remote offline analyzer, and therefore requires secure capping like a screw cap (corresponding to the second cap type), the sample analyzing system may be configured to overrule an operator's manual association of this station with the capping options "uncapped state" and/or "first cap state" etc. The fail-save mechanism may prevent or reduce conflicts at selected stations.

According to a development of the embodiment, the sample analyzing system further comprises a capping option module in which possible capping options for each of the plurality of stations are stored, wherein each possible capping option corresponds to one of the capping selections that the secondary tube may have and/or has to have at the respective station, and wherein the cap selection module reads the at least one capping option for the at least one selected station out of the capping option module. Herein, an operator may associate the capping options to the stations and write and/or store the capping options in the capping option module. The capping option module may be provided as a software module running on a processor and/or it may comprise said processor. The capping option module may comprise a memory for storing the capping options. For example, the capping option module may be provided as a database. The cap selection module and the capping option module may be provided of subroutines of the same software and/or they may be communication with each other. The possible capping option may correspond to the different capping states that also serve as the possible capping selections for the cap selection module. They may comprise at least the following three cap states:
- the uncapped state,
- the first cap state, and
- the second cap state.

For each station, at least one capping option associated to that station may be stored in the capping option module. Editing the capping option module may enable an improved configuration of the sample analyzing system, e.g., when a station is configured differently and/or added to the sample analyzing system.

According to an embodiment, each capping option is associated to a preference and the cap selection module selects the capping selection corresponding to the capping option associated to the highest preference, wherein the first cap state and the second cap state are associated to different preferences. The preferences associated to the capping options may comprise information specifying which capping options are preferred in which order. In some cases, the capping option is selected based on which capping option associated to a station comprises the highest preference, i.e., is most preferred at said station. Associating each capping option to a preference improves controlling the selection of the cap selection module. The preference may depend on costs and/or handling time and/or handling complexity associated to the respective capping type. For example, the uncapped state may be associated to the highest preference, because it is both the most cost and time efficient cap state. A similar difference may be associated to the first and second cap state, e.g., because applying a screw cap may be less cost and/or time efficient than applying a push cap. Giving the more cost and/or time efficient capping state a higher preference may enable to reduce costs and/or handling time.

According to an embodiment, in case the secondary tube is scheduled for being sent to at least two selected stations of the plurality of stations, the cap selection module selects the capping selection corresponding to the capping option being common to all the selected stations and being associated to the highest preference. In particular, in this case the secondary tube is associated to at least a first and second selected station. Each of the selected stations may be associated to different capping options. For example, whenever the secondary tube is scheduled to be stored first and analyzed later, the first selected station may be a storage station associated to the first and second cap state. In this example, the second selected station may be an analyzer station comprising a cap opener and, thus, being associated to the uncapped state, the first cap state, and second cap state. The cap selection module is configured to first obtain the capping options common to all the selected station, meaning the intersection between a set of capping options associated with the first selected station and the set of capping options associated with a second selected station, and, if applicable, also that of a third and so on. In this example above, capping options that the first selected station and the second selected station have in common, i.e., the aforementioned intersection, are the first and second cap state. From these common capping options, the cap selection module selects the capping option associated to the highest preference. In the example, the capping option associated to the highest preference could be the first cap state, e.g., a push cap, having a higher preference than the second cap state, e.g., a screw cap state, because it is more cost and/or time efficient to use. Thus, whenever the secondary tube is scheduled for more than one selected station, the cap selection module selects the optimized capping state for the scheduled selected stations. This may improve the capping sample analyzing system.

According to an embodiment, the aliquoter station is further configured to keep a primary cap on the primary tube in case the sample is not scheduled for aliquoting and in case the cap selection module selects a primary cap state as capping selection for the primary tube. In case the one primary sample within the primary tube is sufficient for the scheduled analyzing, no aliquoting may be required. Thus, the primary tube may suffice and no further secondary samples in secondary tubes are required. The aliquoter station is configured to then not aliquot the primary sample but to keep it in the primary tube. Alternatively or in addition, for example, if the selected station is a station that can or must handle or process tubes with a cap, e.g., a storage station, the aliquoter station is configured to not even open the primary cap but to keep it on the primary tube. This may further increase the cost and/or handling efficiency of the primary tube.

According to an embodiment, the first cap station and the second cap station are provided as substations of the same capping station of the sample analyzing system. Said capping is also referred to as common capping station. Alternatively or additionally the sample analyzing system comprises a gripper being configured to provide the secondary tube with either a cap of the first cap type or a cap of the second cap type, depending on the selected capping selection. The common capping station may comprise said gripper. The common capping station may be configured to apply more different caps to the secondary tube than just the first and the second cap type. The gripper for applying the different cap types to the secondary tubes may be implemented as a robot gripper of the sample analyzer station.

The sample analyzer station may comprise a robot gripper tool for one or more, of the following, e.g., for each of the following:
- transporting secondary sample tubes, e.g., within the aliquoter station; and/or
- aliquoting secondary samples from the primary tube into the secondary tubes; and/or
- applying a cap of the first cap type to the secondary tube; and/or
- applying a cap of the second cap type to the secondary tube.

For example, the above or another robot gripper tool may, e.g., in cooperation with a tube clamp for immobilizing the secondary tube body within a sample container carrier on a transport track, screw a screw cap (e.g., a cap of the second cap type) onto the secondary tube.

Combining the cap stations and/or these functionalities of the gripper enables an efficient use of the resources and/or space.

In an alternative embodiment, the first and second cap stations are provided as separate cap stations arranged at different, e.g., spaced apart, locations. For example, the second cap station may be provided as a substation of the aliquoter station, and the first cap station may be provided as a separate station at a different location of the sample analyzing system. Using designated and/or separate cap stations may enable using less sophisticated cap stations.

According to an embodiment, the sample analyzing station further comprises a station scheduling module configured to: identify the primary tube, and/or schedule how many secondary tubes the aliquoter station should prepare from the sample of the identified primary tube, and/or schedule to which of the plurality of stations each secondary tube and/or the primary tube should be transported as selected station(s). In particular, the cap selection module may be in communication, e.g., in data communication, with the station scheduling module to read out and/or obtain information about which are the selected stations for each secondary and/or primary tube. The station scheduling module may be provided as a software module running on a processor and/or it may comprise said processor. The station scheduling module and/or the cap selection module and/or the capping option module may be provided of subroutines of the same software and/or they may be in communication, e.g., in data communication, with each other. The station scheduling module may obtain information about the primary tube and which tests are intended for the primary sample. Depending on that, the station scheduling module may schedule how many samples in total are required for running all the intended tests. Depending on that, the station scheduling module may then schedule how many secondary samples should be aliquoted. The station scheduling module may communicate the resulting number of required secondary samples as part of a scheduling information to the cap selection module. Additionally, the station scheduling module may associate the selected station(s) to each required secondary sample. Additionally, the station scheduling module may communicate to the cap selection module information specifying, for each required secondary sample, the stations associated with that required secondary sample. For instance, said information may be part of the scheduling information for the cap selection module.

Alternatively, the cap selection module may obtain the scheduling information from the station scheduling module. In particular, the cap selection module may select the capping selection based on the scheduling information. For instance, this selection may also be based on capping options associated with the selected station(s) and obtained from the capping option module. Thus, the station scheduling module may improve the overall handling of the samples contained in the primary tubes.

According to an embodiment, wherein sample tubes are scheduled for later use, the cap scheduling module selects the second cap state, in particular a screw cap state, as the capping selection. Therein, the sample within the sample tube may be stored, e. g., at a storage station for later use. At a later point in time, said sample tube may be moved from the storage station and re-routed to the aliquoter station, wherein, it may be aliquoted again as described above. This handling process may, e.g., be applied to so called QC (Quality Control) material. In another embodiment, the QC material may be aliquoted, capped with a screw cap, stored at a storage station for a period of time, then removed from the storage section, uncapped and routed to a selected analyzer which requires to receive said QC material.

According to an embodiment, wherein a secondary tube is scheduled for centrifuging, in particular for re-centrifuging, the cap scheduling module selects the second cap state, in particular a screw cap state, as the capping selection. The secondary tube may then be scheduled to a centrifuge station, e.g., by the station scheduling module. After centrifugation at said centrifuge station, the centrifuged secondary tube may be routed back to the aliquoter station and/or another station of the sample anaylzing system, e.g., a station for analyzing samples and/or for transporting samples to an offline analyzer. In this embodiment, even a re-centrifugation may be applied automatically to the secondary tubes. This may be enabled by selecting the secondary cap state and closing the secondary tube by a cap of the according cap type.

An aspect relates to a computer implemented method of capping secondary tubes of a sample analyzing system comprising a plurality of stations for analyzing samples and/or for storing samples and/or for transporting samples to an offline analyzer, the method comprising the steps:
- identifying a sample contained within a primary tube of the sample analyzing system;
- controlling an aliquoter station of the sample analyzing system to aliquot the sample, depending on which tests are scheduled for the sample within the primary tube, by filling a share of the sample contained in the primary tube into at least one secondary tube;
- scheduling the secondary tube for sending it to at least one selected station from the plurality of stations;
- selecting, by a cap selection module, a capping selection for the secondary tube, wherein capping selections include:
   - an uncapped state,
   - a first cap state, wherein the secondary tube is closed by a cap of a first cap type, and
   - a second cap state, wherein the secondary tube is closed by a cap of a second cap type being different from the from the first cap type; and
- controlling a cap station to close the secondary tube by a cap of the first cap type if the first cap state is selected, or by a cap of the second cap type if the second cap type state is selected, or leaving the secondary tube uncapped if the uncapped state is selected, before sending the secondary tube to its at least one selected station.

The computer implemented method may be used to control a sample analyzing system according to the previous aspect. Therefore, the description of the sample analyzing system also applies to the computer implemented method and *vice versa.*

The computer implemented method may be implemented as a software module being loaded into the processor of a computing device. Said computing device may comprise a processor and a non-transitory medium. The computing device may be connected to stations of the sample analyzing system, in particular the aliquoter station. The computing device may be a station of the sample analyzing system.

The invention is further illustrated in reference to embodiments shown in the figures. Embodiments of the invention are described with reference to the figures. Features of the embodiments shown in the figures may be combined with alternative embodiments. Identical reference numbers may identify identical or similar features of the embodiments. The embodiments as shown by:
- Fig. 1: a schematic view of a sample analyzing system according to an embodiment; and
- Fig. 2: a schematic flowchart of a computer implemented method of capping secondary tubes of a sample analyzing according to an embodiment.

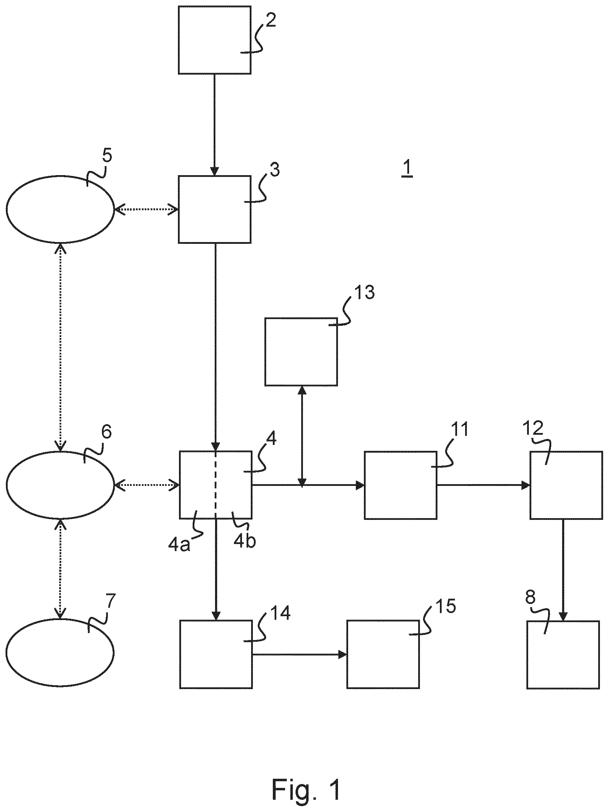

**Fig. 1** shows a schematic view of a sample analyzing system 1 comprising a plurality of stations. The sample analyzing system 1 may be provided as a tube analyzing system, sometimes also referred to as laboratory automation system and/or automated lab system and/or LAS. The sample analyzing system 1 may be configured to automatically and/or semi-automatically analyze samples which are contained in primary tubes that are entered in the sample analyzing system 1. The samples included in the primary tubes may be referred to as primary samples. Primary and secondary tubes may be referred to as sample tubes.

The sample analyzing system 1 may be configured to move sample tube, through the sample analyzing system 1 to different stations thereof. Samples may be samples of blood and/or other bodily fluids on which laboratory analysis is to be performed. The analysis may require transporting the sample to various stations, e.g., to stations 2-4, 8, and 11-15 shown in Fig. 1, e.g., for aliquoting, centrifuging, or other sample handling processes. The sample analyzing system 1 may comprise any number of stations. In particular, the sample analyzing system 1 schematically depicted in fig. 1 comprises nine stations 2-4, 8, 11-15 but, in some embodiments, the sample analyzing system may comprise more than or less than nine stations. The stations may be arranged in series and/or in parallel.

The sample analyzing system 1 may be configured to transport a plurality of samples at the same time, e.g., more than 10 samples, more than 50 samples, and/or more than 100 samples at the same time. The sample analyzing system 1 shown in Fig. 1 may comprise a conveyor or other transportation tools like a gripper configured to transport samples between the stations 2-4, 8, and 11-15 of the sample analyzing system 1. Therein, a driven conveyor belt moving along a track in at least one movement direction may be used to transport the sample tubes between the stations 2-4, 8, and 11-15.

The sample tubes move through the sample analyzing system 1 on the track schematically indicated in Fig. 1 by the arrows identified by solid lines. In an embodiment, the track may be looped to its stating point. Alternatively, as shown in Fig. 1, the track may have a start point and/or at least one end point.

For example, the sample analyzing system 1 shown in Fig. 1 comprises an input station 2 at which primary tubes enter the sample analyzing system 1. Primary tubes may be of different shape and size, depending on from where and/or by whom the primary tubes are sent to the sample analyzing system 1. Each primary tube may be closed by a primary cap. These primary caps may also differ in shape/diameter.

The primary tubes may be provided with an ID tag, e.g., a barcode and/or an RFID tag so that they may be identified and/or localized automatically e.g. by a barcode reader.

Each sample within the primary tube is scheduled for at least one clinical test and/or analyzing test to be performed on the sample. The type of test to be performed on the sample may depend on the sample type (e.g., blood or urine) and/or the sample state (e.g., frozen or ambient temperature) and/or on user specifications for said sample (e.g., detailed or less detailed hemogram).

From the input station 2, the primary tube may be conveyed to an aliquoting station 3 of the sample analyzing system 1. At said aliquoting station 3, the primary tube may be aliquoted. For example, the aliquoting station 3 may be configured to open the primary cap of the primary tube and/or fill at least a share of the primary sample contained within the primary tube into at least one secondary tube. Whether or not the aliquoting station 3 should uncap the primary tube and/or how many secondary tubes the aliquoting station 3 prepares from the sample may depend on the analyzing test required for the sample. A sample not scheduled for aliquoting may not even be transported to the aliquoter station.

The sample analyzing system 1 may comprise a station scheduling module 5 which may be implemented as a software module installed on a computer comprising a processor such as a CPU, a GPU and/or the like. The station scheduling module 5 may read out which primary tube is currently handled at the aliquoting station 3 and which analyzing tests should be performed with the sample of said primary tube. Depending on these analyzing tests, the station scheduling module 5 may schedule to which further stations of the sample analyzing system 1 or at least a fraction of it should be transported and which tests should be performed there. These stations may be scheduled as selected stations for the respective sample tubes. For each sample tube, i.e., for each primary tube and/or each secondary tube, the station scheduling module 5 may schedule at least one selected station. However, the station scheduling module 5 may select more than one selected station for each sample tube, for example first a storage station and/or a freezing station and later one of the analyzing stations, or first a centrifuge station and then another analyzing station.

Depending on a test schedule for the primary sample, the station scheduling module 5 may select a number of secondary samples the aliquoting station 3 should prepare from the primary sample. For example, the station scheduling module 5 may come to the result that no further secondary sample is required, so that the aliquoting station 3 should not prepare any secondary sample in any secondary tube. Alternatively, the station scheduling module 5 may determine that one, two, three or more further secondary sample(s) is/are required, so that the aliquoting station 3 should prepare a corresponding number of secondary samples into secondary tubes.

The station scheduling module 5 may be in communication with the aliquoting station 3 and/or control how many secondary tubes comprising a secondary sample the aliquoting station 3 should currently prepare.

The secondary tubes used by the sample analyzing system 1 may be configured with a predetermined shape and/or size and/or diameter. At least some or all of the secondary tubes may be provided with a thread for applying a screw cap. The secondary tubes of the sample analyzing system 1 may be closed by either a first cap type, e.g., a push cap, or by a second cap type, e.g. a screw cap. For example, each secondary tube of the sample analyzing system 1 may be configured to be closed by either a cap of the first cap type or by a cap of the second cap type. Alternatively, the sample analyzing system 1 may comprise secondary tubes of a first type that may be closed by a cap of the first cap type, secondary tubes of a second type that may be closed by a cap of the second cap type, and, optionally, secondary tubes of a third type that may be closed by a cap of either the first or second cap type.

The sample analyzing system 1 may be configured to handle more than the first and second cap types, e.g., three or four different cap types.

The secondary tubes may be provided with an ID tag, e.g., a barcode and/or an RFID tag so that they may be identified and/or localized automatically by an according reader.

The sample analyzing system 1 may transport both the primary tubes and the secondary tubes from the aliquoter station 3 on through the sample analyzing system 1, wherein both kinds of tubes are referred to as sample tubes.

However, because the primary tubes may differ in shape/diameter etc., they sometimes may only be closed with their respective primary cap, but not always with the first and/or second cap type.

After the aliquoter station 3, the sample tube, being either the primary tube or one of the secondary tubes aliquoted therefrom, is sent to a cap station 4 of the sample analyzing system 1. The cap station 4 is configured to add a cap to the sample tube.

The cap station 4 may be integrated in the aliquoter station 3, or it may be at least partially provided as a separate station.

The cap station 4 may be provided as a universal and/or common capping station being configured to apply both a cap of the first cap type or a cap of the second cap type to the sample tube. Alternatively, the cap station 4 may comprise a first cap station 4a configured to apply cap of the first cap type and a second cap station 4b configured to apply a cap of the second cap type. The first cap station 4a and the second cap station 4b may be provided at the same location, adjacent to each other, or spaced apart from each other at different locations along the track of the sample analyzing system 1.

The possibility to select the cap types of the cap that shall close the secondary tubes may have several advantages. For example, the second cap type may close the secondary tube more liquid tight than the first cap type. The first cap type may be cheaper and/or less sophisticated to handle than the second cap type.

In an embodiment, the cap station 4 may comprise at least one gripper, e.g., a robot gripper tool being configured to screw a screw cap as a cap of the second cap type to one of the secondary tubes and/or to push a push cap onto one of the secondary tubes as a cap of the first cap type.

The sample analyzing system 1 may comprise a cap selection module 6 which may be implemented as a software module installed on a computer comprising a processor such as a CPU, a GPU and/or the like. The cap selection module 6 may be implemented on the same computer as the station scheduling module 5.

The cap selection module 6 may be configured to read out and/or obtain scheduling information specifying the one or more selected stations to which the secondary tube, shall be transported. In particular, the cap selection module 6 may be in data communication with the station scheduling module 5 and obtain said information from the scheduling module 5.

Furthermore, the cap selection module 6 may be configured to read out and/or obtain capping information specifying which capping options are associated to and/or necessary for and/or allowed at each selected station to which the secondary tube, shall be transported, the cap selection module 6 may be in communication with a capping option module 7 and obtain said information from the capping option module 7.

The sample analyzing system 1 may comprise the capping option module 7 which may be implemented as a software module installed on a computer comprising a processor such as a CPU, a GPU and/or the like. The capping option module 7 may be implemented on the same computer as the station scheduling module 5 and/or the cap selection module 6.

In particular, all possible capping options for each station of the sample analyzing system 1 may be stored in the capping option module 7. The capping options may be and/or relate to capping states of the sample tubes, e.g., the capping states "uncapped", "first cap state", "second cap state", and "primary cap state". In particular, in an embodiment, the first cap type is a push cap, and the second cap type is a screw cap, the capping states may be "uncapped", "push cap state", "screw cap state", and "primary cap state". In embodiments with different and/or further capping states, the capping states may be different, e.g., according to the available cap types. In some embodiments, there is no "primary cap state".

For example, the sample analyzing system 1 may comprise a station that is configured to process only capped sample tubes, i.e., it may not be able to properly process uncapped tubes. In this case, in particular, the capping options for said station are "first cap state", "second cap state", and "primary cap state" and may be stored in the capping option module 7. For instance, the capping option module 7 may be a storage station at which the sample tube is stored for a predetermined period of time.

The exemplary sample analyzing system 1 shown in Fig. 1 comprises a storage station 13 at which sample tubes may be stored, e.g., after they were analyzed at one of the analyzer stations. To reduce the amount of liquid evaporating from the sample tube during storage, all sample tubes should be capped in said storage station 13. Therefore, the capping option module 7 may store the three capping options "first cap state", "second cap state", and "primary cap state" for the storage station 13.

Another storage station may be provided as a freezing storage station or deep freeze storage station, wherein the sample tube may be required to be closed by specific cap type like the second cap type, e.g., by a screw cap. For such a storage station, the capping option module 7 may store only the capping option "second cap state".

Also, for another station, e.g., a transport station 15, the sample tubes may be required to be sealed by a cap of the second cap type (e.g., a screw cap) before they are collected at the transport station 15 and shipped to a remote offline analyzer (not shown). For this transport station 15 to a remote offline analyzer, the capping option module 7 may store only the capping option "second cap state".

The sample tube may also be scheduled to be sent to another offline analyzer that is not remote but, e.g., in the same laboratory, but still offline from the sample analyzing system 1. Then, the sample tube may be scheduled to a transport station 14to a close analyzer. For this transport station 14, the capping option module 7 may store the capping options "first cap state", "second cap state", and "primary cap state", because it may be necessary that the sample tube is just somehow capped for being brought to the offline analyzer located in the same laboratory as the sample analyzing system 1.

The two transport stations 14 and 15 may be the same transport station and/or substations of a transport station.

The sample analyzing system 1 may further comprise at least a first analyzer station 11 and a second analyzer station 12. The first analyzer station 11 may be configured to process both capped and uncapped tubes and may be configured to process capped tubes, irrespective of the type of the cap with which the tubes are capped. In this case, the capping option module 7 may store the capping options "second cap state", "first cap state", "primary cap state", and "uncapped state" for the first analyzer station 11.

The second analyzer station 12 may be configured so that it can only handle uncapped sample tubes. If this is the case the capping option module 7 may store only the capping option "uncapped" for the second analyzer station 12.

The sample analyzing system 1 may comprise more stations not shown in Fig. 1 with further and/or different capping options. The capping option module 7 may store the respective capping options for each station of the sample analyzing system 1. The capping options may be generated automatically and/or input by an operator.

After the cap selection module 6 has read out which capping options are necessary and/or available for each selected station of a current sample tube from the capping option module 7, the cap selection module 6 selects a capping selection for the current sample tube. The current sample tube may refer to the sample tube currently handled by the respective station, e.g., by the cap selection module 6. The term equally applies to the current secondary tube and the current primary tube. Available capping selections may be "first cap state", "second cap state", "primary cap state", and "uncapped state". The "primary cap state" may only be available for the primary tube. The "first cap state" and the "second cap state" may only be available for secondary tubes. The "uncapped state" may be available for all sample tubes.

In particular the cap selection module 6 may obtain the scheduling information from the cap selection module 5 and may obtain capping information from the capping option module 7. In particular, the scheduling information specifies that the transport station 15 is the selected station for the current sample tube. For instance, the capping information specifies the capping options associated to the selected transport station 15. In the current example the only capping option for the selected transport station 15 is the "second cap state". The cap selection module 6 accordingly selects the only available capping state "second cap state" as capping selection for the current sample tube.

The cap selection module 6 may be configured to select one of the available capping options for the selected station as capping selection for the current sample tube.

In case the current sample tube is scheduled to visit more than one station as selected stations, the cap selection module 6 reads out the capping options for all of the selected stations and selects as capping selection an option that is available for all of the selected stations as the capping selection, e.g., a common capping option. The cap selection module 6 may be configured to not select any capping selection missing an association to one of the selected stations.

For example, in case the sample tube is scheduled to go to the storage station 13 first and then to the first analyzer station 11, the cap selection module 6 will not select the "uncapped state" which is a capping option for the first analyzer station 11, but not a capping option for the storage station 13. Instead, it will select one of the other three capping states stored as capping option for both the storage station 13 and the first analyzer station 11, namely one of the following capping options: "second cap state", "first cap state", "primary cap state.

In case there is a plurality of capping options that are available for all the scheduled station(s), the cap selection module 6 may be configured to select as capping selection the capping option with the highest preference. For example, the capping options may have the following preferences:
- uncapped state: 1^{st} preference
- primary cap state: 2^{nd} preference
- first cap state: 3^{rd} preference
- second cap state: 4^{th} preference

For example, in case all four capping options are available, e.g., if the current sample tube is scheduled to the processed only by the first analyzer station 11, the cap selection module 6 may select the "uncapped state" as capping selection, because it has the highest preference.

In case all three different capping states are available as capping options, e.g., because the sample tube is scheduled to be moved to the storage station 13 and then to be processed by the first analyzer station 11, the cap selection module 6 may select the "primary cap state" if the current sample tube is a primary tube, or it will select the "first cap state", e.g., if the current sample tube is a secondary tube and the primary cap is not suitable to close the secondary tube.

The preferences of the capping options and/or of the capping selections may depend on how expensive and/or efficient the respective capping options are. For example, the uncapped state is usually the most cost efficient and handling efficient option, because no cap needs to be applied. The primary cap is also rather cost efficient because it usually comes already with the primary tube, so no extra cap is required. Furthermore, the first cap type (e.g., push caps) may be less expensive and/or less sophisticated to handle than the second cap type (e.g., screw caps). For example, it may take longer to apply a screw cap to a secondary tube than a push cap. Thus, using a cap of the first cap type instead of a cap of the second cap type may be more cost efficient and more time efficient.

The cap station 4 is configured to cap the current sample tube according to the capping selection selected by the cap selection module 6.

Considering the preferences associated to the capping options and/or capping states enables the cap selection module 6 to select the most efficient capping selection. Additionally, the capping options stored in the capping option module 7 enable the sample tubes to be capped, so that they can be appropriately processed and/or handled by the at least one selected station. For example, in case a secondary tube needs to be shipped to a remote offline analyzer, the secondary tube is provided with a cap of the second cap type, e.g., a screw cap, to ensure that these tubes are sealed properly as per DOT and/or IATA regulations. Thus, the secondary tube can then be safely transported outside the laboratory in which the sample analyzing system 1 is arranged or can be stored safely.

For instance, the second cap station 4b, e.g., being provided as part of the cap station 4, may be configured to apply a cap of the second cap to the secondary tube so that it may be stored safely within a frozen environment, e.g., at -20°C for up to at least 4 weeks.

Finally, the sample analyzing system 1 may comprise a discard station 8 to which the sample tubes may be conveyed for discarding the samples from there, e.g., after all tests are finished.

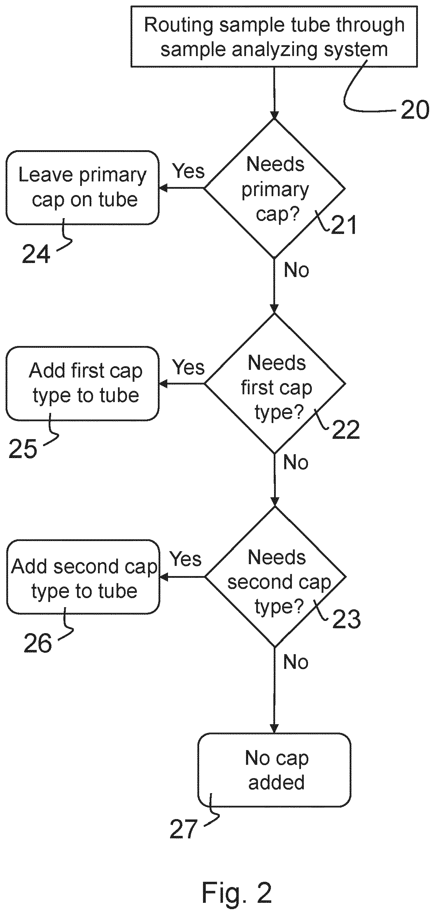

**Fig. 2** shows a schematic flowchart of a method for capping sample tubes containing a sample according to an embodiment. The method may be at least partially implemented as a computer implemented method, e.g., a method for controlling the station scheduling module 5 and/or the cap selection module 6 and/or the capping option module 7.

At a routing step 20, the method comprises routing of a sample tube through the sample analyzing system. For example, routing step 20 may be carried out by the station scheduling module 5 of the sample analyzing system 1 as described above and schematically depicted in fig. 1.

Routing step 20 may comprise selecting sample handling processes and/or their according selected stations for a primary sample contained in a primary tube. The routing may be based on information regarding tests requested for the primary sample tube. Depending on said selected sample handling processes, routing step 20 may include selecting, based on the selected sample handling processes, the respective stations of the sample analyzing system 1 to which the sample should be sent.

The routing step 20 may include establishing a number of secondary samples required for the selected sample handling processes, and selecting for each secondary sample a respective subset of the selected sample handling processes as selected sample handling processes for said each secondary sample. Routing step 20 may further comprise selecting a subset of the selected sample handling processes as selected sample handling processes for said primary sample.

After this routing is established in the routing step 20, e.g., by the station scheduling module 5, the aliquoter station 3 may be controlled to prepare the according number of secondary tubes containing a secondary sample, respectively.

For the current sample tube, the sample tube being either a primary tube or a secondary tube, a capping selection may be selected, e.g., by the cap selection module 6. As described above, the selection of the capping selection may depend on the selected sample handling processes - and/or the corresponding selected stations - and the capping options associated with the selected stations. The associated capping options may, as described above, be stored in the capping option module 7.

The cap selection module 6 may, during an optional 1^{st} check 21, check whether the primary cap state is an associated common capping option. In the positive, and if the current sample tube is a primary tube, the primary cap state may be selected as capping selection. This may lead to the primary tube getting closed by a primary cap during a primary capping step 24. Alternatively, it may remain capped. In the negative, the cap selection module 6 carries out a 2^{nd} check 22.

During the 2^{nd} check 22, the cap selection module 6 may check whether the first cap state is an associated common capping option for the selected stations and/or sample handling processes. In the positive, and if the current sample tube is a secondary tube, the first cap state may be selected as capping selection. This may lead to the current secondary tube getting closed by a cap of the first cap type during a first cap type adding step 25, e.g., at the first cap station 4a. In the negative, the cap selection module 6 carries out a 3^{rd} check 23.

During the 3^{rd} check 23, the cap selection module 6 may check whether the second cap state is an associated common capping option for the selected stations and/or sample handling processes. In the positive, and if the current sample tube is a secondary tube, the secondary cap state may be selected as capping selection. This may lead to the current secondary tube getting closed by a cap of the second cap type during a second cap type adding step 26, e.g., at the second cap station 4b. In the negative, the current sample tube may be left uncapped, and no cap will be added, e.g., during a no cap adding step 27.

The capping options to apply no cap, a first cap type, or a second cap type, may be set in the capping option module 7 by an operator.

For example, the operator may select a checkbox corresponding to the second cap state for a current sample tube when a second cap type is required for the secondary tube, e.g., for a send-out to an offline analyzer. Thereby, the operator may configure the capping option module 7.

In a situation wherein the operator has selected both the first cap type and the second cap type in the capping option module 7, the first cap will be added because the 2^{nd} check 22 comes before the 3^{rd} check 23. By bringing the checks 21-23 in a preferred order, preferences can be given to the different capping options and/or capping sates.

At least one capping option should be associated to the selected station, otherwise the sample analyzing system 1 may give an error notice.

In the sample analyzing system 1, required cap types may be applied to the secondary tubes automatically, e.g., screw caps, thereby ensuring these samples tubes are sealed properly as per DOT and/or IATA regulations. A customer may then safely transport these sample tubes to outside laboratories or store them safely.

The sample analyzing system 1 may produce a secondary sample in a secondary tube that can be stored safely within the frozen environment, e.g., at -20°C for up to at least 4 weeks, because it may cap the secondary tube automatically as required.

### List of Reference Numerals

- 1: sample analyzing system
- 2: input station
- 3: aliquoter station
- 4: cap station
- 4a: first cap station
- 4b: second cap station
- 5: station scheduling module
- 6: cap selection module
- 7: capping option module
- 8: discard station
- 11: first analyzer station
- 12: second analyzer station
- 13: storage station
- 14: transport station to a close offline analzer
- 15: transport station to a remote offline analyzer
- 20: routing step
- 21: 1^{st} check
- 22: 2^{nd} check
- 23: 3^{rd} check
- 24: primary capping step
- 25: first cap type adding step
- 26: second cap type adding step
- 27: no cap adding step

## Claims

1. Sample analyzing system (1) for analyzing a sample contained within a primary tube entering the sample analyzing system (1), the sample analyzing system (1) comprising:
- a plurality of stations (11, 12, 13, 14, 15) for analyzing samples and/or for storing samples and/or for transporting samples to an offline analyzer;
- an aliquoter station (3) configured to, depending on which tests are scheduled for the sample within the primary tube, fill a share of the sample contained in the primary tube into at least one secondary tube, wherein the secondary tube is scheduled for being sent to at least one selected station (11, 12, 13, 14, 15) from the plurality of stations (11, 12, 13, 14, 15);
- a first cap station (4a) configured to apply a cap of a first cap type to the secondary tube;
- a second cap station (4b) configured to apply a cap of a second cap type to the secondary tube, wherein the second cap type differs from the first cap type; and
- a cap selection module (6) configured to select a capping selection for the secondary tube, wherein capping selections include one or more of:
- an uncapped state,
- a first cap state, wherein the secondary tube is closed by a cap of the first cap type, and
- a second cap state, wherein the secondary tube is closed by a cap of the second cap type;
wherein the sample analyzing system (1) is further configured to, depending on the selected capping selection, close the secondary tube by a cap of the first cap type at the first cap station if the first cap state is selected, or by a cap of the secondary cap type at the second cap station if the second cap state is selected, or leave the secondary tube uncapped if the uncapped state is selected, before the secondary tube is send to its at least one selected station (11, 12, 13, 14, 15).

2. The sample analyzing system (1) according claim 1, wherein the cap selection module (6) is configured to base its selection of the capping selection on the at least one selected station (11, 12, 13, 14, 15), in particular on a processing method the selected station (11, 12, 13, 14, 15) is configured to apply to the secondary tube.

3. The sample analyzing system (1) according to claim 1 or 2, wherein the second cap type closes the secondary tube tighter than the first cap type; and/or
wherein the first cap type is implemented as a push cap, and/or the second cap type is implemented as a screw cap.

4. The sample analyzing system (1) according to any of the preceding claims, wherein, in case the secondary tube is scheduled to be sent to a station (14, 15) for transporting samples to an offline analyzer, the offline analyzer being remote from the sample analyzing system (1), the cap selection module (6) is configured to select the second cap state for the secondary tube.

5. The sample analyzing system (1) according to any of the preceding claims, wherein, in case the secondary tube is scheduled to be send to a station wherein the secondary tube may and/or is required to be open (12), the cap selection module (6) is configured to select the uncapped state for the secondary tube.

6. The sample analyzing system (1) according to any of the preceding claims, wherein, in case the secondary tube is scheduled to be sent to a station for storing samples (13), the cap selection module (6) is configured to select the first cap state or the second cap state for the secondary tube, wherein the selected cap state in particular depends on a scheduled storage time and/or a storage method.

7. The sample analyzing system (1) according to any of the preceding claims, wherein the cap selection module (6) is configured to obtain at least one capping option for the at least one selected station and to select the capping selection for the secondary tube based on said at least one capping option, in particular wherein the capping option corresponds to one of the capping selections.

8. The sample analyzing system (1) of claim 7, further comprising a capping option module (7) in which possible capping options for each of the plurality of stations (11, 12, 13, 14, 15) are stored, wherein each possible capping option corresponds to one of the capping selections that the secondary tube may have and/or has to have at the respective station (11, 12, 13, 14, 15), and wherein the cap selection module (6) reads the at least one capping option for the at least one selected station (11, 12, 13, 14, 15) out of the capping option module (7).

9. The sample analyzing system (1) of claim 7 or 8, wherein each capping option is associated to a preference and the cap selection module (6) selects the capping selection corresponding to the capping option associated to the highest preference, wherein the first cap state and the second cap state are associated to different preferences.

10. The sample analyzing system (1) of claim 9, wherein, in case the secondary tube is scheduled for being sent to at least two selected stations (11, 12, 13, 14, 15) of the plurality of stations (11, 12, 13, 14, 15), the cap selection module (6) selects the capping selection corresponding to the capping option being common to all the selected stations (11, 12, 13, 14, 15) and being associated to the highest preference.

11. The sample analyzing system (1) according to any of the preceding claims, wherein the aliquoter station (3) is further configured to keep a primary cap on the primary tube in case the sample is not scheduled for aliquoting and in case the cap selection module (6) selects a primary cap state as capping selection for the primary tube.

12. The sample analyzing system (1) according to any of the preceding claims, wherein the first cap station (4a) and the second cap station (4b) are provided as substations of the same capping station (4) of the sample analyzing system (1) and/or wherein the sample analyzing system (1) comprises a gripper being configured to close the secondary tube by either a cap of the first cap type or a cap of the second cap type, depending on the selected capping selection (11, 12, 13, 14, 15).

13. The sample analyzing system (1) according to any of the preceding claims, further comprising a station scheduling module (5) configured to identify the primary tube, to schedule how many secondary tubes the aliquoter station (3) should prepare from the sample of the identified primary tube, and to schedule to which of the plurality of stations (11, 12, 13, 14, 15) each secondary tube and/or the primary tube should be transported as respective at least one selected station (11, 12, 13, 14, 15), wherein in particular the cap selection module (6) is in communication with the station scheduling module (5) to read out which are the selected stations (11, 12, 13, 14, 15) for each secondary and/or primary tube.

14. Computer implemented method of capping secondary tubes of a sample analyzing system (1) comprising a plurality of stations (11, 12, 13, 14, 15) for analyzing samples and/or for storing samples and/or for transporting samples to an offline analyzer, the method comprising the steps:
- identifying a sample contained within a primary tube of the sample analyzing system (1);
- controlling an aliquoter station (3) of the sample analyzing system (1) to aliquot the sample, depending on which tests are scheduled for the sample within the primary tube, by filling a share of the sample contained in the primary tube into at least one secondary tube;
- scheduling the secondary tube for sending it to at least one selected station (11, 12, 13, 14, 15) from the plurality of stations (11, 12, 13, 14, 15);
- selecting, by a cap selection module, a capping selection for the secondary tube, wherein capping selections include one or more of:
- an uncapped state,
- a first cap state, wherein the secondary tube is closed by a cap of the first cap type, and
- a second cap state, wherein the secondary tube is closed by a cap of the second cap type being different from the from the first cap type; and
- controlling a cap station (4a, 4b, 4) to close the secondary tube by a cap of the first cap type if the first cap state is selected, or by a cap of the second cap type if the second cap type state is selected, or leaving the secondary tube uncapped if the uncapped state is selected, before sending the secondary tube to its at least one selected station (11, 12, 13, 14, 15).

## Amended claims

### Amended claims in accordance with Rule 137(2) EPC.

1. Sample analyzing system (1) for analyzing a sample contained within a primary tube entering the sample analyzing system (1), the sample analyzing system (1) comprising:
- a plurality of stations (11, 12, 13, 14, 15) for analyzing samples and/or for storing samples and/or for transporting samples to an offline analyzer;
- an aliquoter station (3) configured to, depending on which tests are scheduled for the sample within the primary tube, fill a share of the sample contained in the primary tube into at least one secondary tube, wherein the secondary tube is scheduled for being sent to at least one selected station (11, 12, 13, 14, 15) from the plurality of stations (11, 12, 13, 14, 15);
- a first cap station (4a) configured to apply a cap of a first cap type to the secondary tube;
- a second cap station (4b) configured to apply a cap of a second cap type to the secondary tube, wherein the second cap type differs from the first cap type; and
- a cap selection module (6) configured to select a capping selection for the secondary tube, wherein capping selections include one or more of:
- an uncapped state,
- a first cap state, wherein the secondary tube is closed by a cap of the first cap type, and
- a second cap state, wherein the secondary tube is closed by a cap of the second cap type;
wherein the sample analyzing system (1) is further configured to, depending on the selected capping selection, close the secondary tube by a cap of the first cap type at the first cap station if the first cap state is selected, or by a cap of the secondary cap type at the second cap station if the second cap state is selected, or leave the secondary tube uncapped if the uncapped state is selected, before the secondary tube is send to its at least one selected station (11, 12, 13, 14, 15).

2. The sample analyzing system (1) according claim 1, wherein the cap selection module (6) is configured to base its selection of the capping selection on the at least one selected station (11, 12, 13, 14, 15), in particular on a processing method the selected station (11, 12, 13, 14, 15) is configured to apply to the secondary tube.

3. The sample analyzing system (1) according to claim 1 or 2,
wherein the second cap type is configured to close the secondary tube tighter than the first cap type; and/or
wherein the first cap type is implemented as a push cap, and/or the second cap type is implemented as a screw cap.

4. The sample analyzing system (1) according to any of the preceding claims, wherein, in case the secondary tube is scheduled to be sent to a station (14, 15) for transporting samples to an offline analyzer, the offline analyzer being remote from the sample analyzing system (1), the cap selection module (6) is configured to select the second cap state for the secondary tube.

5. The sample analyzing system (1) according to any of the preceding claims, wherein, in case the secondary tube is scheduled to be send to a station wherein the secondary tube may and/or is required to be open (12), the cap selection module (6) is configured to select the uncapped state for the secondary tube.

6. The sample analyzing system (1) according to any of the preceding claims, wherein, in case the secondary tube is scheduled to be sent to a station for storing samples (13), the cap selection module (6) is configured to select the first cap state or the second cap state for the secondary tube, wherein the selected cap state in particular depends on a scheduled storage time and/or a storage method.

7. The sample analyzing system (1) according to any of the preceding claims, wherein the cap selection module (6) is configured to obtain at least one capping option for the at least one selected station and to select the capping selection for the secondary tube based on said at least one capping option, in particular wherein the capping option corresponds to one of the capping selections.

8. The sample analyzing system (1) of claim 7, further comprising a capping option module (7) in which possible capping options for each of the plurality of stations (11, 12, 13, 14, 15) are stored, wherein each possible capping option corresponds to one of the capping selections that the secondary tube may have and/or has to have at the respective station (11, 12, 13, 14, 15), and wherein the cap selection module (6) is configured to read the at least one capping option for the at least one selected station (11, 12, 13, 14, 15) out of the capping option module (7).

9. The sample analyzing system (1) of claim 7 or 8, wherein each capping option is associated to a preference and the cap selection module (6) is configured to select the capping selection corresponding to the capping option associated to the highest preference, wherein the first cap state and the second cap state are associated to different preferences.

10. The sample analyzing system (1) of claim 9, wherein the cap selection module (6) is configured to select, in case the secondary tube is scheduled for being sent to at least two selected stations (11, 12, 13, 14, 15) of the plurality of stations (11, 12, 13, 14, 15), the capping selection corresponding to the capping option being common to all the selected stations (11, 12, 13, 14, 15) and being associated to the highest preference.

11. The sample analyzing system (1) according to any of the preceding claims, wherein the aliquoter station (3) is further configured to keep a primary cap on the primary tube in case the sample is not scheduled for aliquoting and in case the cap selection module (6) selects a primary cap state as capping selection for the primary tube.

12. The sample analyzing system (1) according to any of the preceding claims, wherein the first cap station (4a) and the second cap station (4b) are provided as substations of the same capping station (4) of the sample analyzing system (1) and/or wherein the sample analyzing system (1) comprises a gripper being configured to close the secondary tube by either a cap of the first cap type or a cap of the second cap type, depending on the selected capping selection (11, 12, 13, 14, 15).

13. The sample analyzing system (1) according to any of the preceding claims, further comprising a station scheduling module (5) configured to identify the primary tube, to schedule how many secondary tubes the aliquoter station (3) should prepare from the sample of the identified primary tube, and to schedule to which of the plurality of stations (11, 12, 13, 14, 15) each secondary tube and/or the primary tube should be transported as respective at least one selected station (11, 12, 13, 14, 15), wherein in particular the cap selection module (6) is in communication with the station scheduling module (5) to read out which are the selected stations (11, 12, 13, 14, 15) for each secondary and/or primary tube.

14. Computer implemented method of capping secondary tubes of a sample analyzing system (1) comprising a plurality of stations (11, 12, 13, 14, 15) for analyzing samples and/or for storing samples and/or for transporting samples to an offline analyzer, the method comprising the steps:
- identifying a sample contained within a primary tube of the sample analyzing system (1);
- controlling an aliquoter station (3) of the sample analyzing system (1) to aliquot the sample, depending on which tests are scheduled for the sample within the primary tube, by filling a share of the sample contained in the primary tube into at least one secondary tube;
- scheduling the secondary tube for sending it to at least one selected station (11, 12, 13, 14, 15) from the plurality of stations (11, 12, 13, 14, 15);
- selecting, by a cap selection module, a capping selection for the secondary tube, wherein capping selections include one or more of:
- an uncapped state,
- a first cap state, wherein the secondary tube is closed by a cap of the first cap type, and
- a second cap state, wherein the secondary tube is closed by a cap of the second cap type being different from the from the first cap type; and
- controlling a cap station (4a, 4b, 4) to close the secondary tube by a cap of the first cap type if the first cap state is selected, or by a cap of the second cap type if the second cap type state is selected, or leaving the secondary tube uncapped if the uncapped state is selected, before sending the secondary tube to its at least one selected station (11, 12, 13, 14, 15).
